# EUROPEAN PATENT APPLICATION

(11) **EP 4 840 693 A1**
(43) Date of publication of application: **18.11.2026**
(21) Application number: 26178283.3
(22) Date of filing: 12.05.2026
(51) Int. Cl.: B60N 2/39, B60N 2/02

(54) **VEHICLE SEAT AND RELATED ADJUSTMENT METHOD**

(30) Priority: 12.05.2025 IT 202500010654
(71) Applicant: FERRARI S.p.A., 41100 Modena (IT)
(72) Inventor: DUSINI, Luca, 41100 MODENA (IT); DI MARTINO, Gianfranco, 41100 MODENA (IT); LAUDANI, Giuseppe, 41100 MODENA (IT); CALI', Michele, 41100 MODENA (IT); BAIAMONTE, Giuliana, 41100 MODENA (IT)
(74) Representative: Studio Torta S.p.A.

(57) **Abstract**

Seat (10) for a vehicle (1) comprising a frame (14), a seat base (11), which is operatively connected to and/or integrated into the frame (14) and a plurality of linear actuators (50a, 50b, 50c, 50d) operatively connected to said frame (14) and adapted to be operatively connected to a portion (3) of the motor vehicle (1). Each actuator (50a, 50b, 50c, 50d) is configured to extend or retract along a respective working direction (A) so as to move the frame (14) relative to the portion (3) of the motor vehicle (1).

## Description

### CROSS-REFERENCE TO RELATED APPLICATIONS

This patent application claims priority from Italian patent application no. 102025000010654 filed on May 12, 2025, the entire disclosure of which is incorporated herein by reference.

### FIELD OF THE ART

The present invention relates to a vehicle seat and to a vehicle comprising such a seat.

The present invention also relates to a method for adjusting a vehicle seat.

### CONTEXT

Vehicles are known to be equipped with seats for the driver and/or any passengers. The seats are operatively connected to the vehicle floor panel and essentially comprise:
- a frame;
- padding made from a foam, such as polyurethane, which is supported by the frame; and
- an outer covering, such as leather, which encloses the padding.

It is also common practice to fit seats with adjustment mechanisms, which ensure that users of very different builds can maintain correct posture and enjoy a certain level of comfort.

For example, the adjustment mechanisms may include guides for sliding the seat along an adjustment axis and/or devices for adjusting the angle of the backrest.

However, it has been noted that regulatory mechanisms are often cumbersome and leave room for improvement.

These issues are particularly acute in the field of electric vehicles, especially when they are fitted with electric batteries arranged beneath the floor panel. In fact, in such vehicles, on the one hand, the height of the floor panel must be such as to allow for the installation of the electric batteries; on the other hand, the height of the seat (and, in particular, the height of the so-called 'H-point', i.e. the theoretical point corresponding to the junction between the torso and the upper legs of a hypothetical user) relative to the floor panel must be limited for reasons of vehicle safety and stability.

Specifically, during the design phase, conventional adjustment mechanisms make it difficult to meet the aforesaid two conflicting requirements relating to the presence of electric batteries and seat height.

In light of the above, there is a clear need to adjust the seats efficiently, whilst minimising the overall space taken up by the components required to enable such adjustment.

An object of the invention is to meet the need described above, preferably in a simple and reliable manner.

### DESCRIPTION OF THE INVENTION

This is achieved by a vehicle seat and an adjustment method as defined in the independent claims. The dependent claims define particular embodiments of the invention.

### BRIEF DESCRIPTION OF THE DRAWINGS

The following describes an embodiment of the invention to aid understanding, by way of a non-limiting example and with reference to the accompanying drawings, in which:
- Figure 1 is a perspective view of a seat according to the present invention;
- Figures 2, 3 and 4 are perspective views of a portion of the seat shown in Figure 1 in three respective operating configurations;
- Figure 5 is a schematic top view of a portion of the seat shown in Figures 1 to 4.

### EMBODIMENTS OF THE INVENTION

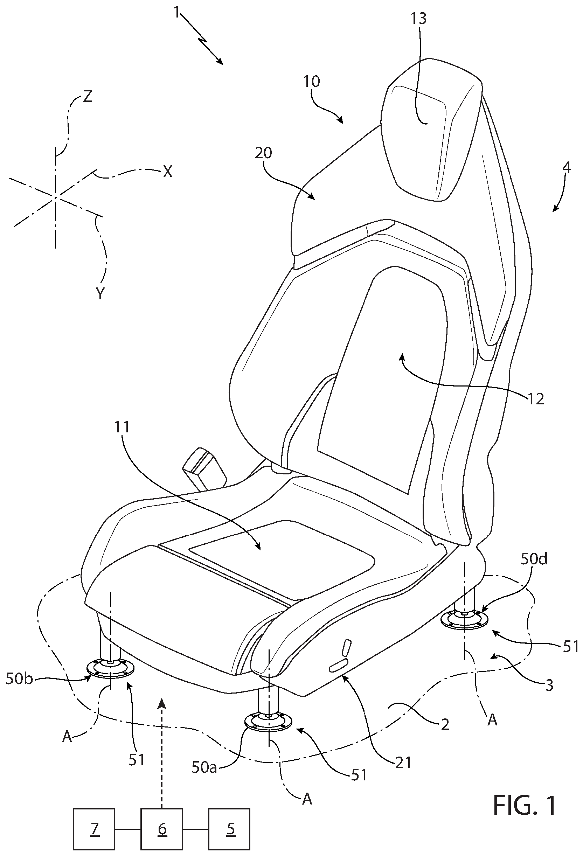

In Figure 1, reference number 1 is used to denote a vehicle as a whole, comprising:
- a chassis 2;
- a plurality of wheels - not shown - which can rotate relative to the chassis 2 about their respective axes of rotation; and
- one or more seats 10, each of which is operatively connected to the chassis 2 and adapted to support a driver or passenger of the motor vehicle 1.

The motor vehicle 1 defines a reference system comprising:
- a roll axis X, which extends longitudinally;
- a pitch axis Y, which is orthogonal to the axis X; and
- a yaw axis Z, which is orthogonal to the axes X and Y.

Specifically, the axis Z is oriented vertically to the ground on which the wheels of the motor vehicle 1 rest.

In the remainder of this description, terms such as 'below', 'above', 'low', 'high', 'front', 'rear' and the like should be understood with reference to the direction of travel of the motor vehicle 1 relative to the ground.

The chassis 2, in turn, comprises a floor panel or floor 3, which is shown only schematically in Figure 1. In a known manner, the floor panel 3 is oriented orthogonally or substantially orthogonally to the axis Z.

More specifically, the chassis 2 defines a passenger compartment 4 designed to accommodate the driver and/or any passengers, within which one or more seats 10 are arranged. In addition, the floor panel 3 forms the lower boundary of the passenger compartment 4 along the axis Z. In other words, the floor panel 3 serves as the floor of the passenger compartment 4.

Preferably, and without this implying any loss of generality, the motor vehicle 1 is an electric vehicle. Specifically, the motor vehicle comprises an electric motor operatively connected to at least some of the wheels and an electrical energy storage device (not shown), such as an electric battery, which is electrically connected to the electric motor. To be more specific, the electric battery is located, at least in part, beneath the floor panel 3.

For the sake of brevity, in the remainder of this description and unless otherwise stated, reference will be made to a single seat 10. The seat 10 essentially comprises:
- a frame 14; and
- a seat base 11, which is operatively connected to and/or integrated into the frame 14.

In detail, the seat base 11 is attached to the frame 14 and positioned above it.

In the embodiment shown, the seat 10 also comprises:
- a backrest 12 extending from the seat base 11 on the side facing away from the floor panel 3; and
- a headrest 13 arranged on the side of the backrest 12 facing away from the seat base 11.

Preferably, the seat base 11 is inclined relative to the floor panel 3, following the profile of a ramp. In detail, the seat base 11 slopes upwards from the rear part to the front part of the motor vehicle 1. This helps to minimise the risk of the occupant of the seat 10 sliding towards the front of the motor vehicle 1 during braking and slipping out of the seatbelt (a phenomenon known as "submarining*"*).

Preferably, the seat 10 is also fitted with padding 20.

The seat 10 further comprises a seat pan 21 at the part of the seat base 11 facing the floor panel 3. In detail, the seat pan 21 is a structural portion of the seat base 11. In further detail, the seat pan 21 is operatively connected to the seat frame 14 and helps to support the padding 20.

The seat pan 21 is the lowest structural part of the seat base 11 relative to the axis Z. Preferably, the seat pan 21 should be directly facing the floor panel 3, i.e. without any additional elements in between. Therefore, preferably, the seat pan 21 is arranged at least partly externally to the padding 20. Advantageously, the seat 10 comprises four linear actuators 50a, 50b, 50c, 50d operatively connected to the frame 14 and to the floor panel 3; each actuator 50a, 50b, 50c, 50d is configured to extend or retract along a respective working direction A, so as to move the frame 14 relative to the floor panel 3.

In detail, each actuator 50a, 50b, 50c, 50d comprises two ends 51, 52 opposed to one another along their respective working direction A. One of the two ends 51, 52 is operatively connected, specifically attached, to the floor panel 3, and the other of the two ends 51, 52 is operatively connected to the frame 14.

As shown in the figures, the working directions A of the actuators 50a, 50b, 50c and 50d are parallel or substantially parallel to one another. Furthermore, the working directions A are preferably parallel or substantially parallel to the axis Z.

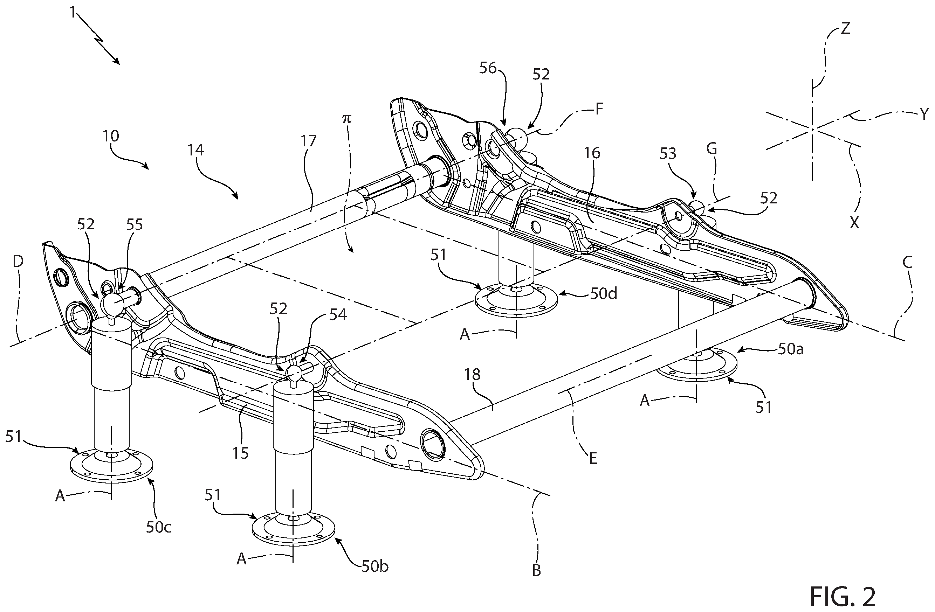

In greater detail, the frame 14 comprises (Figure 2):
- two bodies, 15 and 16, which are parallel to one another and define respective longitudinal directions B and C;
- two bodies, 17 and 18, which are parallel to one another and define respective longitudinal directions D and E, which are transverse to directions B and C.

The bodies 17 and 18 are interposed between bodies 15 and 16 along the respective directions D and E. Furthermore, each body 17 and 18 is attached to both body 15 and body 16.

More specifically, directions D and E are orthogonal to directions B and C. In other words, the assembly of bodies 15, 16, 17 and 18 has a rectangular profile in a plane orthogonal to the axis Z.

Preferably, the elements 15 and 16 are flat or substantially flat plates, and the elements 17 and 18 are tubular elements. Specifically, the bodies 15 and 16 lie on respective planes directed orthogonally to directions D and E.

Furthermore, in the non-limiting embodiment illustrated, directions D and E are parallel or substantially parallel to the axis Y.

More specifically, considering a plane orthogonal to the axis Z, each actuator 50a, 50b, 50c, 50d is positioned at a respective vertex of a quadrilateral. More specifically, two of the actuators, 50b and 50c, are operatively connected to the body 15 and are spaced apart along direction B; the other two actuators, 50a and 50d, are operatively connected to the body 16 and are spaced apart along direction C.

In addition, the actuators 50b and 50c are aligned with the actuators 50a and 50d respectively in directions D and E. Furthermore, the actuators 50a and 50b are positioned at the front, whilst the actuators 50c and 50d are positioned at the rear.

It is also possible to define an axis F passing through the actuators 50c and 50d and an axis G passing through the actuators 50a and 50b. In the embodiment shown, axes F and G are parallel to each other and to directions D and E.

In further detail, the body 18 is spaced apart from the actuators 50a and 50b in directions B and C. Specifically, the body 18 is arranged on the side of the actuators 50a and 50b facing away from the actuators 50c and 50d in directions B and C.

Likewise, the body 17 is spaced apart from the actuators 50c and 50d along directions B and C. Specifically, the body 17 is positioned on the side of the actuators 50c and 50d facing away from the actuators 50a and 50b according to directions B and C.

Specifically, the actuators 50a, 50b, 50c and 50d are constrained to the frame 14 by means of respective spherical constraints 53, 54, 55 and 56.

At least three of the spherical constraints 53, 54, 55 and 56 lie on the same plane π (Figure 2). Specifically, this plane π is spaced away from the seat pan 21 according to the axis Z. In further detail, the plane π is arranged above the seat pan 21. This means that the distance between the plane π and the floor panel 3 is greater than the distance between the seat pan 21 and the floor panel 3 along the axis Z.

As shown in Figure 2, particularly when considering a plane orthogonal to the axis Z, the spherical constraints 53, 54, 55 and 56 are arranged at a respective vertex of the quadrilateral.

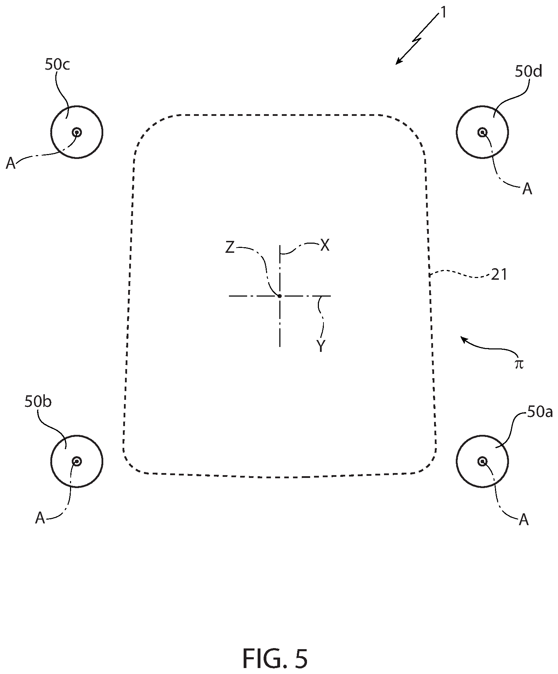

Furthermore, the actuators 50b and 50c are arranged on the side of the body 16 facing away from the body 15; the actuators 50a and 50d are arranged on the side of the body 15 facing away from the body 16. In addition, the working directions A of the actuators 50a, 50b, 50c and 50d are spaced apart and/or arranged externally to a projection of the seat pan 21 on the plane π (Figure 5).

Preferably, but not necessarily, the frame 14 is made of metal.

The actuators 50a, 50b, 50c and 50d are electromechanical, hydraulic or pneumatic.

In addition, the frame 14 and the actuators 50a, 50b, 50c and 50d are arranged externally to the padding 20. In other words, the frame 14 and the actuators 50a, 50b, 50c and 50d are not (completely) embedded in the padding 20.

The motor vehicle 1 also comprises (Figure 1):
- an adjustment device 7 operable by a user of the vehicle 1 to issue a command to move the seat 10 relative to the floor panel 3; and
- an electronic control unit 6 operatively connected to the control device 7 and to the actuators 50a, 50b, 50c, 50d.

The electronic control unit 6 is configured to control the extension or retraction of the actuators 50a, 50b, 50c and 50d in accordance with the movement command.

The control device 7 comprises, for example, a control panel or a joystick and is preferably arranged in the passenger compartment 4. Alternatively, or in addition, the control device 7 comprises a transceiver adapted to being connected remotely to a mobile device, such as a smartphone or a tablet. In that case, the adjustment device 7 is adapted to receive the movement command issued via the mobile device.

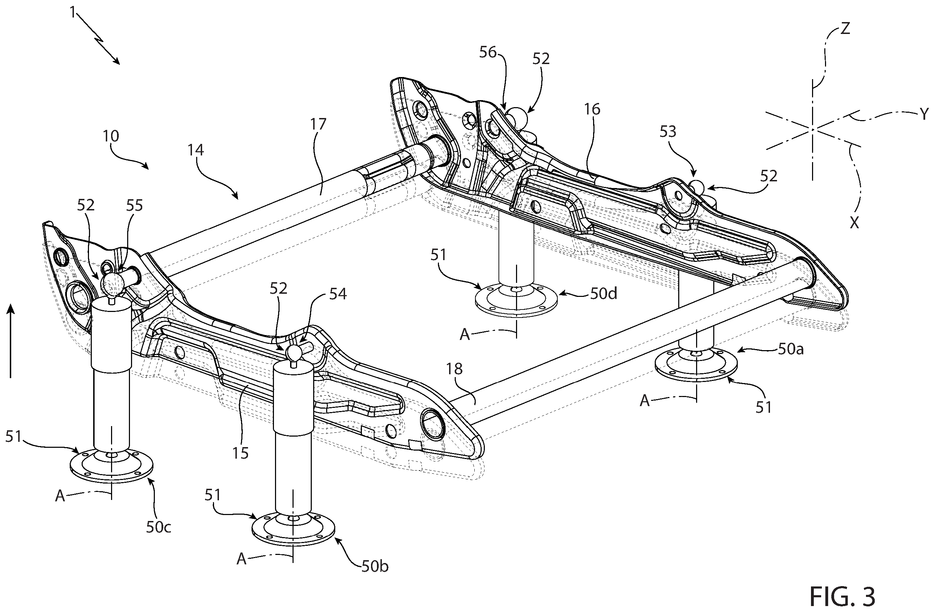

For example, when the user commands the seat 10 to be raised relative to the floor panel 3 (i.e. the seat 10, or at least the seat base 11, is moved away from the floor panel 3 along the axis Z), the electronic control unit 6 is configured to control the extension of all four actuators 50a, 50b, 50c, 50d (Figure 3).

When the user commands the lowering of the seat 10 relative to the floor panel 3 (i.e. the seat 10, or at least the seat base 11, is moved closer to the floor panel 3 along the axis Z), the electronic control unit 6 is configured to control the retraction of all four actuators 50a, 50b, 50c, 50d.

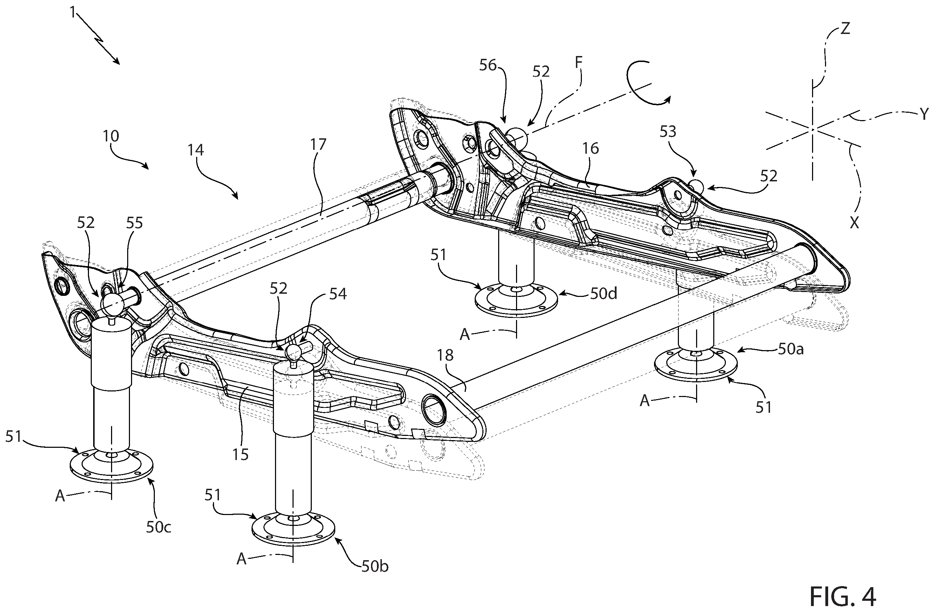

When the user command the inclination of the seat 10 towards the rear part of the motor vehicle 1, the electronic control unit 6 is configured to control the retraction of the actuators 50c and 50d and/or the extension of the actuators 50a and 50b. Preferably, when the user commands the inclination of the seat 10 towards the rear of the motor vehicle 1, the electronic control unit 6 is configured to control the extension of the actuators 50a and 50b and to leave the extension of the actuators 50c, 50d unchanged in their respective working directions A. In other words, the electronic control unit 6 is configured to control the rotation of the seat 10 about the axis F (Figure 4).

When the user commands the inclination of the seat 10 towards the front of the motor vehicle 1, the electronic control unit 6 is configured to control the extension of the actuators 50c and 50d and/or the retraction of the actuators 50a and 50b. Preferably, when the user commands the inclination of the seat 10 towards the front of the motor vehicle 1, the electronic control unit 6 is configured to control the extension of the actuators 50c and 50d and to leave the extension of the actuators 50a, 50b unchanged in their respective working directions A. In other words, the electronic control unit 6 is configured to control the rotation of the seat 10 about the axis G.

The motor vehicle 1 further comprises a sensory system 5 configured to detect a first quantity φ associated with the roll of the motor vehicle 1 and/or a quantity θ associated with the pitch of the motor vehicle 1 (Figure 1).

The sensory system 5 comprises, for example, one or more of the following devices: accelerometers, gyroscopes and inclinometers.

The electronic control unit 6 is operatively connected to the sensory system 5 and is configured to:
- receive the quantity φ and/or quantity θ;
- command the extension or the retraction of at least some of the actuators 50a, 50b, 50c, 50d to compensate for the roll and/or the pitch of the motor vehicle 1 based on the quantity φ and/or the quantity θ.

In detail, the quantity φ is an angle of rotation of the chassis 2 about the roll axis X. In more detail, the rotation of the chassis 2 about the axis X can occur in a first rotation direction or a second rotation direction, which is opposite to the first rotation direction.

More specifically, when the quantity φ corresponds to a rotation of the chassis 2 in the first rotation direction, the electronic control unit 6 is configured to control the extension and/or retraction of at least some of the actuators 50a, 50b, 50c, 50d, so as to cause the seat 10 to rotate about an axis of rotation parallel to directions B and C in the second rotation direction and by an angle associated with - for example, proportional to or, in particular, equal to - the quantity φ; when the quantity φ is associated with a rotation of the chassis 2 in the second rotation direction, the electronic control unit 6 is configured to control the extension and/or retraction of at least some of the actuators 50a, 50b, 50c, 50d, so as to cause the seat 10 to rotate about an axis of rotation parallel to directions B and C and in the first rotation direction, by an angle associated with the quantity φ.

For example, considering an axis of rotation parallel to directions B and C, the rotation of the seat 10 in the first rotation direction can be achieved by extending the actuators 50b and 50c and/or retracting the actuators 50a and 50d; the rotation of the seat 10 in the second rotation direction can be achieved by extending the actuators 50a and 50d and/or retracting the actuators 50b and 50c.

The quantity θ is a pitch angle of the chassis 2 about the pitch axis Y. In more detail, the rotation of the chassis 2 about the axis Y can occur in a third rotation direction or in a fourth rotation direction, which is opposite to the third rotation direction.

In further detail, when the quantity θ corresponds to a rotation of the chassis 2 in the third rotation direction, the electronic control unit 6 is configured to control the extension and/or retraction of at least some of the actuators 50a, 50b, 50c, 50d, so as to cause the seat 10 to rotate about an axis of rotation parallel to the axes of rotation F, G in the fourth rotation direction and by an angle associated with - for example, proportional to or, in particular, equal to - the quantity θ; when the quantity θ is associated with a rotation of the chassis 2 in the fourth rotation direction, the electronic control unit 6 is configured to control the extension and/or retraction of at least some of the actuators 50a, 50b, 50c, 50d, so as to cause the seat 10 to rotate about an axis of rotation parallel to the axes of rotation F, G and in the third rotation direction, and by an angle associated with the quantity θ.

For example, considering an axis of rotation parallel to the axes of rotation F and G, the rotation of the seat 10 in the third rotation direction can be achieved by extending the actuators 50a and 50b and/or retracting the actuators 50c and 50d; the rotation of the seat 10 in the fourth rotation direction can be achieved by extending the actuators 50c and 50d and/or retracting the actuators 50a and 50b.

The operation of the seat 10 is described below.

When in use, the seat 10 inside the motor vehicle 1 serves as a support and rest for the driver or a passenger.

If the occupant of the seat 10 wishes to adjust the seat, they issue a movement command via the adjustment device 7, and the electronic control unit 6 then controls the actuators 50a, 50b, 50c and 50d accordingly.

In detail, if the user commands the raising of the seat 10 relative to the floor panel 3, the electronic control unit 6 commands the extension of all four actuators 50a, 50b, 50c, 50d (Figure 3); conversely, if the user commands the lowering of the seat 10 relative to the floor panel 3, the electronic control unit 6 commands all four actuators 50a, 50b, 50c, 50d to retract.

In addition, if the user commands the inclination of the seat 10 towards the rear of the motor vehicle 1, the electronic control unit 6 commands the actuators 50c and 50d to retract and/or the actuators 50a and 50b to extend (Figure 4); if the user commands the inclination of the seat 10 towards the front of the motor vehicle 1, the electronic control unit 6 commands the extension of the actuators 50c and 50d and/or the retraction of the actuators 50a and 50b.

Furthermore, when a value other than zero or greater than a threshold value of the quantity φ is detected in the first rotation direction, the electronic control unit 6 commands the extension of the actuators 50a and 50d and/or the retraction of the actuators 50b and 50c, so as to rotate the seat 10 in the second rotation direction; when a value other than zero or greater than a threshold value of the quantity φ is detected in the second rotation direction, the electronic control unit 6 commands the extension of the actuators 50b and 50c and/or the retraction of the actuators 50a and 50d, so as to cause the seat 10 to rotate in the first rotation direction.

When a value other than zero or greater than a threshold value of the angle θ is detected in the third rotation direction, the electronic control unit 6 commands the extension of the actuators 50c and 50d and/or the retraction of the actuators 50a and 50b, so as to rotate the seat 10 in the fourth rotation direction; when a value other than zero or greater than a threshold value of the angle θ is detected in the fourth rotation direction, the electronic control unit 6 commands the extension of the actuators 50a and 50b and/or the retraction of the actuators 50c and 50d, so as to rotate the seat 10 in the third rotation direction.

From the foregoing, the advantages of the seat 10 and the motor vehicle 1 according to the invention are clear.

In particular, as the seat 10 comprises actuators 50a, 50b, 50c and 50d, which can be extended and retracted along their respective working directions A, it is possible to efficiently adjust the position of the seat 10 within the passenger compartment 4, whilst limiting the overall space required by the components necessary to enable such adjustment.

Specifically, the seat 10 allows, on the one hand, for the installation of electric batteries beneath the floor panel 3 and, on the other hand, for the height of the 'H-point' relative to floor panel 3 to be limited.

As the motor vehicle 1 comprises the adjustment mechanism 7 and the electronic control unit 6, it is possible to adjust the height or inclination of the seat 10 automatically in response to a movement command issued by the user.

Since the electronic control unit 6 controls the extension or retraction of at least some of the actuators 50a, 50b, 50c, 50d based on the angles φ and/or θ, it is possible to compensate for the roll and pitch movements to which the chassis 2 is subjected, for example when cornering or braking. In this way, user comfort can be significantly improved.

Specifically, since pitch movement can be compensated for during braking, it is possible to minimise the risk of submarining for users and/or limit the angle of the seat base 11 relative to the floor panel 3 during the design phase.

Furthermore, the distance between the seat pan 21 and the floor panel 3 along the axis Z is less than the distance between the plane π and the floor panel 3 along the axis Z, and/or the working directions A lie outside the projection of the seat pan 21 on the plane π. This is because the actuators 50a, 50b, 50c and 50d are not positioned beneath the seat base 11. In other words, although the seat 1 comprises the actuators 50a, 50b, 50c and 50d, the working directions A of which are parallel or substantially parallel to the axis Z, the height of the seat pan 21 relative to the floor 3 may be limited, because the actuators are arranged externally to the seat pan 21. Owing to these structural features, the H-point of the seat 10 can be conveniently positioned very low and/or the thickness of the padding 20 can be increased compared to seats of the known type in which the adjustment mechanisms are located beneath the seat pan 21.

Finally, it is clear that modifications and variations can be made to the seat 10 and method according to the invention without, however, departing from the scope of protection defined by the Claims.

The geometry of the seat 10 can be adapted with considerable flexibility to suit, for example, aesthetic and/or ergonomic requirements.

The seat 10 may not be part of a motor vehicle 1, but may be included in another type of vehicle (for example, a boat) or in a stationary device (for example, a gaming station or a simulator).

The motor vehicle 1 may have more than one seat 10. In particular, for example, the motor vehicle 1 might include a driver's seat 10 and one or more passenger seats 10. The motor vehicle 1 may also comprise a seat 10 adapted to support more than one passenger in the motor vehicle 1 at the same time.

The electronic control unit 6 may only be connected to some of the actuators 50a, 50b, 50c, 50d.

The electronic control unit 6 could also be configured to control the extension or retraction of the actuators 50a, 50b, 50c, 50d so as to cause the seat 10 to rotate about an axis of rotation parallel to directions B and C, based on a movement command issued by the user.

## Claims

1. Seat (10) for a vehicle (1); said seat (10) comprising:
- a frame (14);
- a seat base (11), which is operatively connected to and/or integrated into said frame (14); and
- a plurality of linear actuators (50a, 50b, 50c, 50d) operatively connected to said frame (14) and adapted to be operatively connected to a portion (3) of said vehicle (1), each said actuator (50a, 50b, 50c, 50d) being configured to extend or retract along a respective working direction (A) so as to move said frame (14) relative to said portion (3).

2. Seat according to claim 1, wherein the working directions (A) of said actuators (50a, 50b, 50c, 50d) are parallel or substantially parallel to one another.

3. Seat according to claim 1 or 2, wherein said actuators (50a, 50b, 50c, 50d) lie on the same plane (π).

4. Seat according to claim 3, wherein said actuators (50a, 50b, 50c, 50d) are operatively connected to said frame (14) by means of respective constraints (53, 54, 55, 56);
wherein the constraints (53, 54, 55, 56) of at least three of said actuators (50a, 50b, 50c, 50d) lie on said plane (π).

5. Seat according to claim 4, wherein there are four of said actuators (50a, 50b, 50c, 50d) and the respective constraints (53, 54, 55, 56) are each arranged at a respective vertex of a quadrilateral.

6. Seat according to any one of claims 3 to 5, comprising a seat pan (21) at a region of said seat (11) adapted to face said portion (3) of said vehicle (1);
wherein said plane (π) is spaced away from said seat pan (21) along an axis (Z) that is transversal to said plane (π).

7. Seat according to claim 6, wherein said working directions (A) are situated externally with respect to a projection of said seat pan (21) onto said plane (π).

8. A vehicle (1) comprising:
- a chassis (2);
- at least one seat (10) according to any one of the preceding claims;
wherein said actuators (50a, 50b, 50c, 50d) are operatively connected to a portion (3) of said chassis (2) or integral to said chassis (2);
said vehicle (1) further comprising an electronic control unit (6) operatively connected to at least some of said actuators (50a, 50b, 50c, 50d); said electronic control unit (6) being configured to control the extension or the retraction of at least some of said actuators (50a, 50b, 50c, 50d), so as to move said frame (14) relative to said chassis (2).

9. Vehicle according to claim 8, comprising an adjustment device (7) operable, in use, by a user to impart a movement command of said seat (10) relative to said chassis (2);
said electronic control unit (6) being operatively connected to said adjustment device (7) and being configured to control the extension or the retraction of at least some of said actuators (50a, 50b, 50c, 50d) based on said movement command.

10. Vehicle according to claim 8 or 9, defining:
- a roll axis (X); and
- a pitch axis (Y) orthogonal to said roll axis (Y);
- a yaw axis (Z) orthogonal to said roll axis (X) and pitch axis (Y);
said vehicle (1) comprising a sensory system (5) configured to detect a first quantity (φ) associated with the roll of said vehicle (1) about said roll axis (X) and/or a second quantity (θ) associated with the pitch of said vehicle (1) about said pitch axis (Y);
said electronic control unit (6) being operatively connected to said sensory system (5) and being configured to:
- receive said first quantity (φ) and/or said second quantity (θ);
- command the extension or the retraction of at least some of said actuators (50a, 50b, 50c, 50d) to compensate for the roll and/or the pitch of said vehicle (1) based on said first quantity (φ) and/or said second quantity (θ).

11. Vehicle according to claim 10, when dependent on claim 6 or 7, wherein said portion (3) comprises a floor panel (3);
wherein the distance of said seat pan (21) from said floor panel (3) along said yaw axis (Z) is smaller than the distance of said plane (π) from said floor panel (3) according to said yaw axis (Z).

12. Vehicle according to claim 11, wherein said seat pan (21) is directly facing said floor panel (3).

13. Method of adjustment of a seat (10) for a vehicle (1); said seat (10) comprising:
- a frame (14);
- a seat base (11), which is operatively connected to and/or integrated into said frame (14);
said method comprising the steps of:
i) operatively connecting a plurality of linear actuators (50a, 50b, 50c, 50d) to said frame (14) and to a portion (3) of said vehicle (1);
ii) extending or retracting at least some of said actuators (50a, 50b, 50c, 50d) along a working direction (A) thereof so as to move said frame (14) relative to said portion (3).

14. Method of adjustment according to claim 13, comprising the further step iii) of detecting a first quantity (φ) associated with the roll of said vehicle (1) about a roll axis (X) of said vehicle (1) and/or a second quantity (θ) associated with the pitch of said vehicle (1) about a pitch axis (Y) of said vehicle (1); said pitch axis (Y) being orthogonal to said roll axis (Y);
wherein said step ii) comprises extending or retracting at least some of said actuators (52) to compensate for the roll and/or the pitch of said vehicle (1) based on said first quantity (φ) and/or on said second quantity (θ) detected during said step iii).

15. Method according to claim 13 or 14, wherein said actuators (50a, 50b, 50c, 50d) are operatively connected to said frame (14) by means of respective constraints (53, 54, 55, 56) and the constraints (53, 54, 55, 56) of at least three of said actuators (50a, 50b, 50c, 50d) lie on the same plane (π);
said seat (10) comprising a seat pan (21) at a region of said seat (11) adapted to face said portion (3) of said vehicle (1);
wherein, both during step i) and during step ii), said seat pan (21) is closer to said portion (3) than said plane (π).
